(19) **Europäisches Patentamt · European Patent Office · Office européen des brevets**

(11) **EP 4 708 899 A1**

(12) **EUROPEAN PATENT APPLICATION**

(43) Date of publication:
11.03.2026 Bulletin 2026/11

(21) Application number: 25199807.6

(22) Date of filing: 03.09.2025

(51) International Patent Classification (IPC):
*H04N 25/773* (2023.01)    *H04N 25/53* (2023.01)
*G01S 17/89* (2020.01)

(52) Cooperative Patent Classification (CPC):
H04N 25/773; G01S 7/4863; G01S 7/4865;
G01S 17/89; G01S 17/894; H04N 25/53

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.09.2024 JP 2024153665

(71) Applicant: CANON KABUSHIKI KAISHA
Ohta-ku
Tokyo 146-8501 (JP)

(72) Inventor: FUJIMORI, Soya
Tokyo, 146-8501 (JP)

(74) Representative: TBK
Bavariaring 4-6
80336 München (DE)

(54) **IMAGE CAPTURING APPARATUS WITH AVALANCE PHOTODIODES, IMAGE CAPTURING METHOD, AND COMPUTER PROGRAM PRODUCT**

(57) An image capturing apparatus comprises a photoelectric conversion element having a plurality of pixels, wherein each pixel comprises a sensor unit comprising an avalanche photodiode configured to generate pulses in response to photons incident thereon, a counter configured to count the number of the pulses, a memory configured to store count values of the counter, and a switch configured to switch the avalanche photodiode between a standby state in which avalanche multiplication is possible and a recharge state, a signal generation unit configured to supply a clock signal to the switch, a light emitting unit configured to perform pulse light emission for illuminating a subject in synchronization with the clock signal, and a control unit configured to perform a plurality of exposure operations by the counter according to timing of the pulse light emission and a predetermined image-capturing distance range for capturing images of a subject existing in the predetermined image-capturing distance range, and configured to shift relative timing of the clock signal and the pulse light emission by a predetermined phase for each predetermined exposure operation.

FIG. 11

EP 4 708 899 A1

**Description**

TECHNICAL FIELD

The present disclosure relates to an image capturing apparatus, an image capturing method, a computer program product, and the like.

BACKGROUND

A camera called a range gate camera is known. That is, the range gate camera employs a technology in which pulsed light is emitted at a predetermined cycle in the forward direction from the camera, and an image sensor inside the camera performs exposure at a predetermined timing according to the target distance range, so that only a subject within the target distance range can be clearly captured.

Hereinafter, such technology is called range gate control. By using the range gate control, for example, even in bad weather, a subject (object) at a predetermined distance can be clearly captured.

In addition, mounting of a SPAD (Single Photon Avalanche Diode) sensor, which excels in low-light performance, in the above-described range gate camera is being considered. However, in a SPAD sensor, when a conventional passive recharging method is used, such as in a case in which light is incident on the photodiode under high brightness, there are cases in which photons are incident on the photodiode at the timing when the photodiode is recharged or immediately thereafter.

In this case, the potential of a photon count unit remains in a state in which photons are detected and does not change. As a result, that period is not counted as a period in which photons are obtained. Accordingly, under a high-brightness environment, the actual coefficient value becomes smaller than the coefficient value corresponding to the incident light brightness, and the brightness of the image becomes lower than the original brightness.

In contrast, Japanese Patent Application Laid-Open No. 2020-123847 proposes a drive method called a clocked recharging method in order to use a SPAD sensor under high brightness. Japanese Patent Application Laid-Open No. 2020-123847 discloses that a pixel having an APD comprises an APD, a quench circuit connected to the APD, a signal control circuit into which a signal output from the APD is input, and a pulse generation circuit connected to the quench circuit and the signal control circuit.

The pulse generation circuit controls the on/off of the quench circuit. In addition, it is disclosed that the potential of the output node of the APD is reset, and a pulse signal corresponding to input photons is output even under high brightness.

Patent Document 1: Japanese Patent Application Laid-Open No. 2020-123847

However, in the configuration described in Japanese Patent Application Laid-Open No. 2020-123847, photons entering during a recharge period are not detected. The recharge period is normally several ns to several tens of ns, and because it is a very short time, in a normal shooting mode, the recharge period does not become a problem.

However, in a range gate camera, because light having an emission duration of several ns to several tens of ns is counted in an exposure period (photon count period) of several ns to several tens of ns, the reflected light of the portion that passes during the recharging period cannot be exposed. That is, there is a problem that reflected light from a specific distance range cannot be captured, causing image quality to deteriorate.

SUMMARY

An image capturing apparatus comprises a photoelectric conversion element having a plurality of pixels, wherein the pixels each comprise a sensor unit comprising an avalanche photodiode configured to generate pulses in response to photons incident thereon, a counter configured to count the number of the pulses, a memory configured to store count values of the counter, and a switch configured to switch the avalanche photodiode between a standby state in which avalanche multiplication is possible and a recharge state; a signal generation unit configured to supply a clock signal to the switch; a light emitting unit configured to perform pulse light emission for illuminating a subject in synchronization with the clock signal; and a control unit configured to perform a plurality of exposure operations by the counter according to timing of the pulse light emission and a predetermined image-capturing distance range for capturing images of a subject existing in the predetermined image-capturing distance range, and configured to shift relative timing of the clock signal and the pulse light emission by a predetermined phase for each predetermined exposure operation.

Further features of the present disclosure will become apparent from the following description of embodiments with reference to the attached drawings.

BRIEF DESCRIPTION OF THE DRAWINGS

FIG. 1 is a diagram showing a configuration example of a photoelectric conversion element 100 according to a First Embodiment of the present disclosure.

FIG. 2 is a diagram showing a configuration example of a sensor substrate 11.

FIG. 3 is a diagram showing a configuration example of a circuit substrate 21.

FIG. 4 is an equivalent circuit of a photoelectric conversion unit 102 of each pixel of FIG. 2 and a signal processing circuit 103 corresponding to the photoelectric conversion unit 102.

FIG. 5 is a diagram schematically showing a relationship between operation of a clocked recharging method and output signals.

FIG. 6 is a functional block diagram showing a configuration example of a light emitter 500, a camera 600, and a moving body 700 according to the First Embodiment.

FIG. 7 is a diagram showing an example of the relationship among emission from light emitter 500, travel of the reflected light, and the exposure timing of camera 600 according to the First Embodiment.

FIG. 8 is a timing chart explaining control operation for obtaining range gate images in one frame period according to the First Embodiment.

FIG. 9A and FIG. 9B are diagrams for explaining a relationship between control signal CLK and exposure timing according to the First Embodiment.

FIG. 10 is a diagram showing an example of a relationship between light emission and control signal CLK at each exposure timing according to the First Embodiment.

FIG. 11 is a flowchart showing details of an operation example of an image-capturing method according to the First Embodiment.

FIG. 12A and FIG. 12B are diagrams showing a configuration example of an image capturing element having two photoelectric conversion units in one pixel according to the Second Embodiment.

FIG. 13 is a diagram showing an equivalent circuit of a signal processing circuit corresponding to one pixel in the pixel group 1000 in FIG. 12.

FIG. 14A to FIG. 14C are diagrams for explaining examples of operation modes when using an image capturing element having two photoelectric conversion units in one pixel.

FIG. 15 is a diagram showing problems arising when both the first and second photoelectric conversion signals are counted.

FIG. 16 is a diagram showing an example of a method for solving problems explained in FIG. 15.

DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

<First Embodiment>

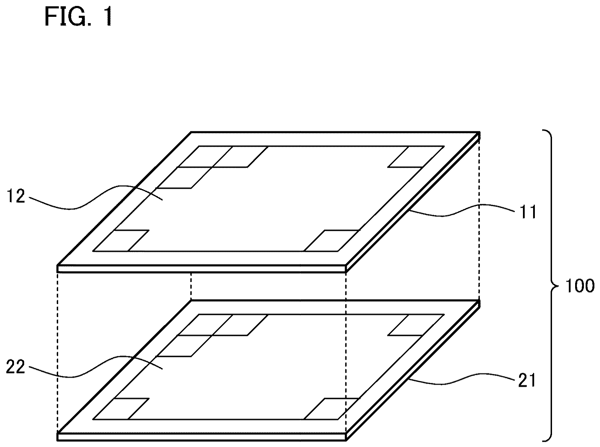

FIG. 1 is a diagram showing a configuration example of a photoelectric conversion element 100 according to a First Embodiment of the present disclosure. The following explanation uses as an example a photoelectric conversion apparatus in which the photoelectric conversion element 100 has a so-called stacked structure, in which two substrates, a sensor substrate 11 and a circuit substrate 21, are stacked and electrically connected.

However, a so-called non-stacked structure may be employed wherein components included in the sensor substrate 11 and components included in the circuit substrate 21 are disposed in a common semiconductor layer. The sensor substrate 11 includes a pixel region 12, and the circuit substrate 21 includes a circuit region 22 that processes signals detected in the pixel region 12.

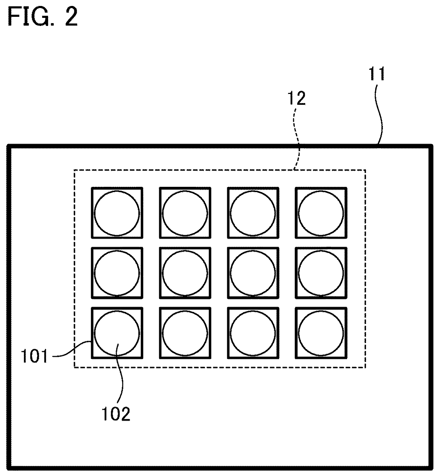

FIG. 2 is a diagram showing a configuration example of the sensor substrate 11. The pixel region 12 of the sensor substrate 11 includes a plurality of pixels 101 arranged two-dimensionally in a plurality of rows and columns. That is, the photoelectric conversion element 100 includes a plurality of pixels. Each pixel 101 includes a photoelectric conversion unit 102 including an avalanche photodiode (hereinafter, APD).

In this context, the photoelectric conversion unit 102 functions as a sensor unit configured to emit pulses in response to photons incident on the avalanche photodiode. It should be noted that the number of rows and the number of columns of the pixel array configuring the pixel region 12 is not particularly limited.

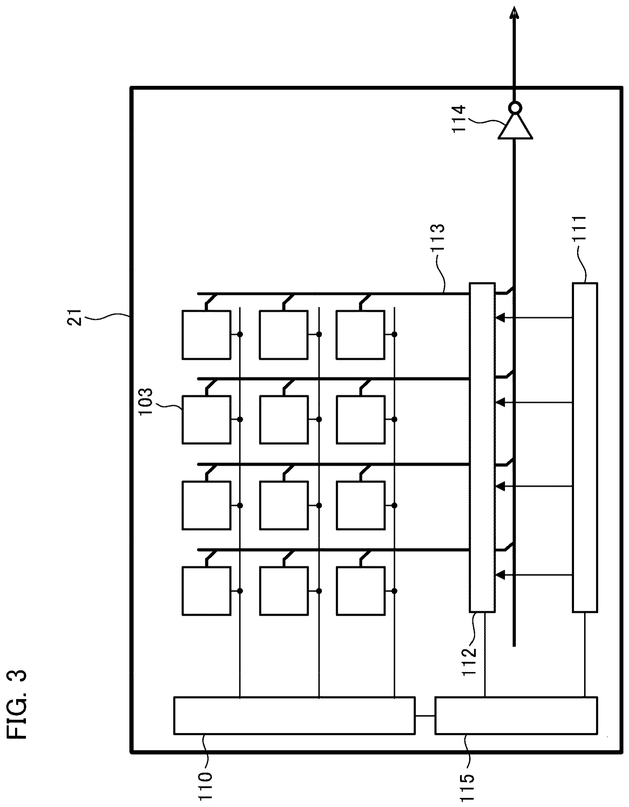

FIG. 3 is a diagram showing a configuration example of the circuit substrate 21. The circuit substrate 21 includes a signal processing circuit 103 configured to process charge photoelectrically converted in each photoelectric conversion unit 102 of FIG. 2, a readout circuit 112, a control pulse generation unit 115, a horizontal scanning circuit 111, a vertical signal line 113, a vertical scanning circuit 110, and an output circuit 114.

The vertical scanning circuit 110 receives control pulses supplied from the control pulse generation unit 115 and sequentially supplies the control pulses, row by row, to a plurality of pixels arranged in a row direction. Logic circuits such as shift registers or address decoders are used in the vertical scanning circuit 110.

Photoelectric conversion signals output from the photoelectric conversion unit 102 of each pixel are processed by the corresponding signal processing circuit 103. The signal processing circuit 103 is provided with a counter, a memory, and the like, and digital values are held in the memory. The horizontal scanning circuit 111 inputs control pulses to the signal processing circuit 103 to sequentially select each column in order to read signals from the memory of each pixel in which digital signals have been held.

Signals are output to the vertical signal line 113 from a plurality of signal processing circuits 103 corresponding to a plurality of pixels in the rows selected by the vertical scanning circuit 110. Signals output to the vertical signal line 113 are output to the exterior of the photoelectric conversion element 100 via the readout circuit 112 and the output circuit 114. A plurality of buffers connected to the vertical signal line 113 are built into the readout circuit 112.

As shown in FIG. 2 and FIG. 3, a plurality of signal processing circuits 103 are disposed in a region that overlaps the pixel region 12 in a plan view. Then, the vertical scanning circuit 110, the horizontal scanning circuit 111, the readout circuit 112, the output circuit 114, and the control pulse generation unit 115 are disposed so as to overlap a peripheral part of the pixel region 12 in a plan view.

That is, the sensor substrate 11 has a pixel region 12 and a non-pixel region disposed around the pixel region 12. Then, the vertical scanning circuit 110, the horizontal scanning circuit 111, the readout circuit 112, the output circuit 114, and the control pulse generation unit 115 are disposed in a region that overlaps the non-pixel region in a plan view.

It should be noted that arrangements of the vertical signal line 113, the readout circuit 112, and the output circuit 114 are not limited to the example shown in FIG. 3. For example, the vertical signal line 113 may be disposed to extend in a row direction, and the readout circuit 112 may be disposed at a position at an end of an extent of the vertical signal line 113. In addition, the signal processing circuit 103 does not necessarily need to be provided one for each of the photoelectric conversion units, and the signal processing circuit 103 may have a configuration wherein one signal processing unit is shared by a plurality of photoelectric conversion units and performs signal processing sequentially.

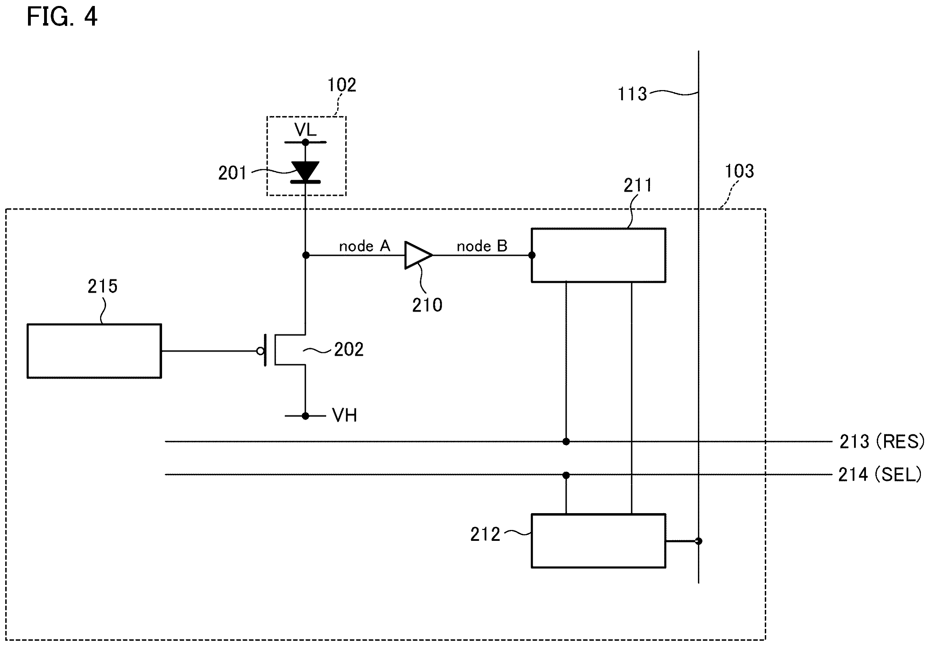

FIG. 4 is a diagram showing an equivalent circuit of the photoelectric conversion unit 102 of each pixel of FIG. 2 and the signal processing circuit 103 corresponding to the photoelectric conversion unit 102.

An APD 201 included in the photoelectric conversion unit 102 generates charge pairs corresponding to incident light by photoelectric conversion. One of the two nodes of the APD 201 is connected to a power source line to which a drive voltage VL (first voltage) is supplied. In addition, the other node of the two nodes of the APD 201 is connected via a switch 202 to a power source line to which a drive voltage VH (second voltage) higher than the drive voltage VL is supplied.

In FIG. 4, one node of the APD 201 is an anode, and the other node of the APD is a cathode. A reverse bias voltage is supplied to the anode and cathode of the APD 201 such that the APD 201 performs avalanche multiplication operation. By establishing such a state in which such a voltage is supplied, electric charges generated by incident light cause avalanche multiplication, and avalanche current is generated.

It should be noted that in a case in which a reverse bias voltage is supplied, there are a Geiger mode in which the voltage difference between the anode and cathode operates at a voltage difference greater than breakdown voltage, and a linear mode in which the voltage difference between the anode and cathode operates at a voltage difference near the breakdown voltage or at a voltage difference equal to or less than the breakdown voltage.

An APD that operates in Geiger mode is called a SPAD. In the case of a SPAD, for example, the drive voltage VL (first voltage) is -30 V, and the drive voltage VH (second voltage) is 1 V. It should be noted that the SPAD is included in the APD.

The signal processing circuit 103 includes a switch 202, a waveform shaping unit 210, a counter circuit 211, a memory circuit 212, and a signal generation unit 215. The switch 202 is connected to a power source line to which the drive voltage VH is supplied and to one of the anode and cathode nodes of the APD 201.

Then, the switch 202 switches the resistance value between the APD 201 and the power source line to which the drive voltage VH is supplied. Here, when switching the resistance value, the resistance value is preferably changed by 10 times or more, and the resistance value is more preferably changed by 100 times or more.

Hereinafter, the resistance value of the switch 202 becoming low is referred to as turning on of the switch 202, and the resistance value becoming high is referred to as turning off of the switch 202. The switch 202 can function as a load circuit (quench circuit) at the time of signal multiplication by avalanche multiplication, and can perform a quench operation that suppresses the voltage supplied to the APD 201 and thereby suppresses avalanche multiplication.

In addition, the switch 202 can perform recharge operation that has a function of returning voltage supplied to the APD 201 to the drive voltage VH by causing current corresponding to the voltage drop due to quench operation to flow. That is, the switch 202 has a function to transition the avalanche photodiode between a standby state, in which avalanche multiplication is possible, and a recharge state.

The switch 202 can be configured by, for example, a MOS transistor, and FIG. 4 shows a case in which the switch 202 is a PMOS transistor. The control signal CLK (clock signal) of the switch 202 supplied from the signal generation unit 215 is applied to a gate electrode of the MOS transistor configuring the switch 202. In the present embodiment, on and off of the switch 202 are controlled by controlling the voltage applied to the gate electrode of the switch 202.

FIG. 4 shows an example in which, in addition to the switch 202, the signal processing circuit 103 includes a waveform shaping unit 210, a counter circuit 211, and a memory circuit 212. The counter circuit 211 counts pulses from the waveform shaping unit 210, and the memory circuit 212 can hold count values of the counter circuit 211. It should be noted that the counter circuit 211 functions as a counter that counts the number of pulses.

The waveform shaping unit 210 shapes voltage changes of the cathode of the APD 201 obtained at the time of photon detection, and outputs pulse signals. An input side node of the waveform shaping unit 210 is referred to as node A, and an output side node is referred to as node B. The waveform shaping unit 210 changes the output voltage from node B according to whether the input voltage to node A is equal to or greater than the predetermined value or is lower than the predetermined value.

When the input voltage to node A becomes a high voltage equal to or greater than the determination threshold value, the output voltage from node B becomes a low level. Then, when the input voltage to node A becomes a voltage lower than the determination threshold value, the output voltage from node B becomes a high level. For example, an inverter circuit is used as the waveform shaping unit 210.

Although FIG. 4 shows an example in which one inverter is used as the waveform shaping unit 210, a circuit in which a plurality of inverters are connected in series may be used, or other circuits having waveform shaping effects may be used.

First, an explanation of a passive recharging method will be provided. Although quench operation and recharge operation using the switch 202 can be performed in accordance with avalanche multiplication in the APD 201, depending on photon detection timing, there are cases in which the photon detection event is not recognized as an output signal.

For example, a case is assumed in which avalanche multiplication occurs in the APD, the input voltage to the node A becomes a low level, and a recharge operation is being performed. It should be noted that the determination threshold value of the waveform shaping unit 210 is set to a voltage higher than a voltage difference at which avalanche multiplication occurs in the APD.

When photons are incident at a time when voltage of the node A is in a state lower than the determination threshold value due to a recharge operation and at a voltage at which avalanche multiplication in the APD is possible, the voltage of the node A decreases due to avalanche multiplication occurring in the APD.

That is, because the voltage of the node A decreases at a voltage lower than the determination threshold value, the output voltage from the node B does not change despite detecting photons. Accordingly, the count values of the counter circuit 211 do not increase despite avalanche multiplication occurring.

In particular, under high illuminance, because photons enter continuously in short periods, it becomes difficult for the count values to increase. As a result, despite high illuminance, the actual numbers of incident photons and the count values easily deviate from each other.

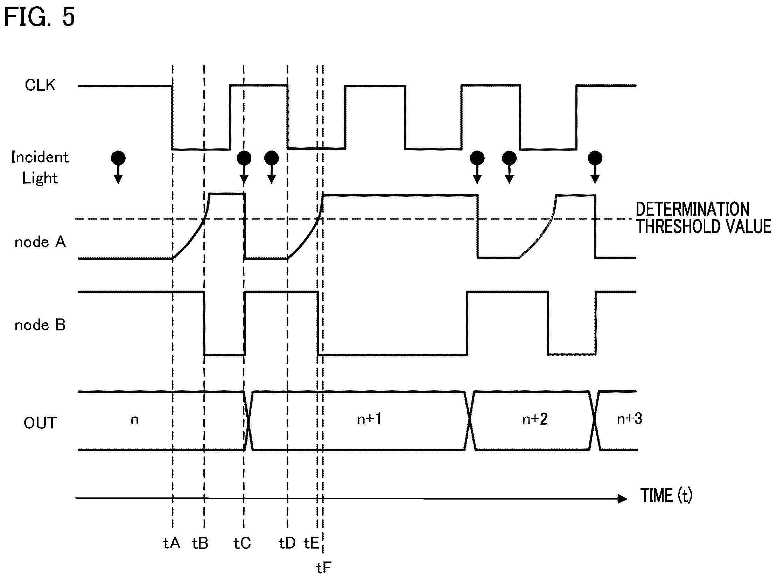

In contrast, in a clocked recharging method according to the present embodiment as shown in FIG. 5 described below, on and off of the switch 202 are switched periodically by applying the control signal CLK (clock signal) of FIG. 5 to the switch 202. Thereby, signal detection becomes possible even in a case in which photons enter the APD continuously in short periods.

As described above, the counter circuit 211 counts the number of pulses output from the waveform shaping unit 210, and holds the count values. In addition, when the control pulse RES is supplied via a RES signal line 213, the count values of the counter circuit 211 are stored in the memory circuit 212, and simultaneously the count values of the counter circuit 211 are reset.

Here, the counter circuit 211 performs counting up from start to end of an exposure period (accumulation period). It should be noted that in the present embodiment, there are a plurality of exposure periods in one frame period, and count values in each exposure period are cumulatively added within one frame period.

A control pulse SEL is supplied to the memory circuit 212 from the vertical scanning circuit 110 of FIG. 3 via a drive line 214 (not shown in FIG. 3) of FIG. 4, and the electrical connection and disconnection between the memory circuit 212 and the vertical signal line 113 are switched.

The memory circuit 212 functions as a memory that temporarily stores the count values of the counter, and after temporarily storing the output signal from the counter circuit 211 of each pixel, the memory circuit 212 outputs this signal to the vertical signal line 113 when the control pulse SEL is supplied.

It should be noted that switches such as transistors may be disposed between the switch 202 and the APD 201 or between the photoelectric conversion unit 102 and the signal processing circuit 103 to switch the electrical connections. Similarly, the supply of the drive voltage VH or the drive voltage VL supplied to the photoelectric conversion unit 102 may be electrically switched by using a switch such as a transistor.

It should be noted that as shown in FIG. 4, the switch 202 is preferably configured by one transistor, and quench operation and recharge operation are preferably performed by one transistor. Thereby, the number of circuits can be reduced compared to a case in which quench operation and recharge operation are performed by respectively different circuit elements.

In particular, in a case in which each pixel has a counter circuit and SPAD signals are read out for each pixel, since counter circuits are provided, minimization of the circuit area for the switch 202 is preferable, and the effect of configuring the switch 202 with a single transistor becomes prominent.

FIG. 5 is a diagram schematically showing the relationship between the operation of a clocked recharging method and output signals, and FIG. 5 explains an example in which a control signal CLK as a clock signal is a pulse signal having a repetitive cycle. That is, in FIG. 5, on and off of a switch 202 are switched at a predetermined clock frequency.

In addition, FIG. 5 schematically shows a relationship among the control signal CLK of the switch 202, the voltage of node A, the voltage of node B, and output signals. In the present embodiment, in a case in which the control signal CLK is at high level, a state is established in which supplying the drive voltage VH to the APD becomes difficult, and in a case in which the control signal CLK is at low level, a state is established in which the drive voltage VH is supplied to the APD.

That is, the high level of the control signal CLK is, for example, 1 V, and the low level of the control signal CLK is, for example, 0 V. In a case in which the control signal CLK is at high level, the switch 202 turns off, and in a case in which the control signal CLK is at low level, the switch 202 turns on.

A resistance value of the switch 202 in a case in which the control signal CLK is at high level becomes higher than the resistance value of the switch in a case in which the control signal CLK is at low level. Accordingly, in a case in which the control signal CLK is at high level, because recharge operation is not performed even when avalanche multiplication occurs in the APD, the voltage supplied to the APD becomes a voltage equal to or less than the breakdown voltage of the APD, and avalanche multiplication operation in the APD stops.

At time tA of FIG. 5, the control signal CLK changes from high level to low level, and the switch 202 turns on, and the recharge operation of the APD is started. As a result, the voltage of a cathode of the APD transitions to high level.

Then, the voltage difference of the voltage applied to an anode and a cathode of the APD becomes equal to or greater than the breakdown voltage, and a state capable of avalanche multiplication is established. Because the voltage of the cathode is the same as the voltage of node A, when the voltage of the cathode transitions from low level to high level, the voltage of node A becomes equal to or greater than the determination threshold value at time tB.

At this time, the pulse signal output from node B inverts, and the pulse signal changes from high level to low level. Thereafter, a state is established in which the voltage difference between drive voltage VH and drive voltage VL is applied to the APD 201. Furthermore, thereafter, the control signal CLK transitions to high level, and the switch 202 turns off.

Next, at time tC, as shown by black circles and downward arrows of FIG. 5, when photons are incident on the APD 201, avalanche multiplication occurs in the APD 201, an avalanche multiplication current flows in the switch 202, and the voltage of the cathode drops. That is, the voltage of node A drops.

When the voltage drop amount becomes further larger and a voltage difference applied to the APD 201 becomes smaller, avalanche multiplication of the APD 201 stops as at time tC, and the voltage level of node A does not drop to equal to or less than a certain constant value. When the voltage of node A becomes lower than the determination threshold value while the voltage of node A is dropping, the voltage of node B changes from low level to high level.

That is, in a case in which an output waveform falls below a determination threshold value at node A, waveform shaping is performed by the waveform shaping unit 210, and the output waveform is output as a high-level signal at node B. Then, the rising edge of node B is counted by the counter circuit, and the count value of a counter signal output from the counter circuit increases by 1 LSB and becomes n+1.

In this manner, every time a rising edge of the waveform of node B occurs in accordance with the control signal CLK, the count value of the counter circuit 211 counts up. Then, the final count value is generated in the counter circuit 211 at the end time of a predetermined exposure period.

In FIG. 5, although photons are incident on the APD between time tC and time tD, because the switch 202 is in an off state and the applied voltage to the APD 201 does not establish a voltage difference capable of avalanche multiplication, the voltage level of node A does not exceed a determination threshold value.

At time tD, the control signal CLK changes from high level to low level, and the switch 202 turns on. Along with this change, a current that compensates for the amount of voltage drop flows to node A, and the voltage of node A transitions from the drive voltage VL to the original voltage level.

At this time, because the voltage of node A becomes equal to or greater than the determination threshold value at time tE, the pulse signal of node B inverts and changes from high level to low level.

At time tF, node A settles to an original voltage level, and thereafter, the control signal CLK changes from low level to high level. Accordingly, the switch 202 turns off. Even thereafter, as explained from time tA to time tF, the voltages of each node, the signal lines, and the like change according to the control signal CLK and the incidence of photons.

Next, an explanation will be provided with respect to a light emitter 500 and a camera 600 that are image capturing apparatuses of the present embodiment, and a movable body 700.

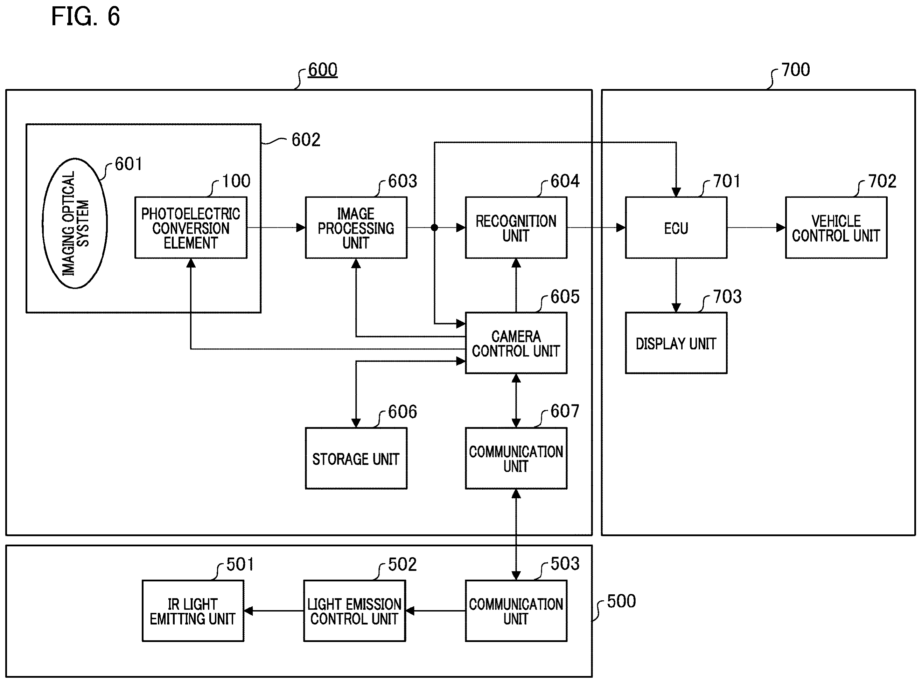

FIG. 6 is a functional block diagram showing a configuration example of the light emitter 500, the camera 600, and the moving body 700 according to the First Embodiment. It should be noted that some of the functional blocks shown in FIG. 6 are realized by causing a computer (not shown) included in the light emitter 500, a computer (not shown) included in the camera 600, and a computer (not shown) included in the moving body 700 to execute computer programs stored in memory serving as storage media (not shown).

However, some or all of the functional blocks may be realized by hardware. As for the hardware, dedicated circuits (ASICs), processors (reconfigurable processors, DSPs), and the like can be used. In addition, each functional block shown in FIG. 6 need not be built into the same housing, and the functional blocks may be configured by separate apparatuses connected to each other via signal paths.

The camera 600 includes a photoelectric conversion element 100, an imaging optical system 601, an image processing unit 603, a recognition unit 604, a camera control unit 605, a storage unit 606, a communication unit 607, and the like. The photoelectric conversion element 100 is configured by the avalanche photodiodes described in FIG. 1 to FIG. 5 for photoelectrically converting optical images.

The image capturing apparatuses of the present embodiment (the camera 600 and the light emitter 500) are mounted on the moving body 700, and an image-capturing unit 602 comprising a set of the imaging optical system 601 and the photoelectric conversion element 100 is configured to capture images in at least one direction among, for example, forward, rearward, and lateral directions of the moving body. It should be noted that a plurality of image-capturing units 602 may be provided on the moving body 700, or a plurality of image capturing apparatuses may be provided thereon.

The image processing unit 603 performs image processing such as black level correction, gamma curve adjustment, noise reduction, digital gain adjustment, demosaic processing, data compression, and the like on image signals acquired by the photoelectric conversion element 100, and generates the final image signals. It should be noted that in a case in which the photoelectric conversion element 100 has an on-chip color filter of RGB and the like, the image processing unit 603 may perform processing such as white balance correction, color conversion, and the like.

In addition, the output of the image processing unit 603 is supplied to the recognition unit 604, the camera control unit 605, and an ECU (Electric Control Unit) 701 of the moving body 700. The recognition unit 604 performs processing of recognizing objects such as surrounding people or vehicles by performing image recognition based on image signals. Deep learning is used for this recognition processing.

For example, as a deep learning method, YOLO (You Only Look Once), which enables easy learning and fast detection, is preferably used. In addition, as other types of deep learning, SSD (Single Shot Multi Box Detector), Faster R-CNN (Regional Convolution Neural Network), Fast R-CNN, R-CNN, and the like may also be used.

In addition, in the present embodiment, the recognition unit 604 calculates distances to recognized objects. That is, the recognition unit 604 calculates, for example, a first distance range and a second distance range by recognizing a subject. It should be noted that as a distance measurement method, distance estimation may be performed using deep learning, for example. That is, for example, distance values may be calculated by analyzing information such as blur of images of detected objects using deep learning.

As another method, a method may be used in which the image capturing apparatus serves as a stereo camera and distance measurement is performed using the principles of triangulation. Alternatively, distance measurement may be performed using phase difference signals from the photoelectric conversion element by making the photoelectric conversion element a phase difference detection type image capturing element. Recognition processing including distance estimation is executed for each of the color images and IR (infrared) images input from the image processing unit 603, and recognition results are output to the ECU 701 in a subsequent stage.

It should be noted that although the present embodiment will be explained by using an automobile as an example of the moving body 700, the moving body may be any type of movable body provided that the moving body can move, such as aircraft, trains, ships, drones, AGVs, robots, and the like.

The camera control unit 605 includes a CPU serving as a computer and a memory that stores computer programs, and performs control of each part of the camera 600 by causing the CPU to execute the computer programs stored in the memory.

It should be noted that the camera control unit 605 functions as control means, and performs control of, for example, the length of the exposure periods (accumulation periods, count periods in the counters) of each frame of the photoelectric conversion element 100 and the timing of control signals via a control pulse generation unit of the photoelectric conversion element 100, and the like. In addition, the camera control unit 605 transmits the same signal as the above-described reference signal to the light emitter 500 via the communication unit 607.

In this manner, the same reference signal transmitted to the photoelectric conversion element 100 is also transmitted to the light emitter 500, and the light emitter 500 executes light emission control based on the reference signal, thereby performing synchronous control of the exposure timing inside the photoelectric conversion element 100 and the light emission timing by the light emitter 500.

The storage unit 606 includes recording media such as memory cards or hard disks, and can store and read out image signals. The communication unit 607 includes wireless and wired interfaces, outputs generated image signals to an exterior of the camera 600, and receives various signals from the exterior.

In addition, in the present embodiment, the communication unit 607 is connected to a communication unit 503 of the light emitter 500, and also serves to transmit the above-described reference signal and control commands from the camera control unit 605 to the light emitter 500.

The light emitter 500 has a light emitting unit 501, a light emission control unit 502, and a communication unit 503. The light emitting unit 501 includes, for example, near-infrared LEDs for illuminating subjects in front of the moving body 700, and the light emitting unit 501, combined with lenses, can irradiate beam light. In addition, the light emitting unit outputs near-infrared pulsed light for a predetermined light emission time in accordance with the pulse signals output from the light emission control unit 502.

The light emission control unit 502 receives a reference signal transmitted by the camera control unit 605 of the camera 600 via the communication unit 503, generates pulse signals at predetermined timing based on the reference signal, and outputs the pulse signals to the light emitting unit 501.

In this context, the light emission control unit 502 can set periods from a reference signal to pulse output, pulse output widths, pulse non-output widths, and also repetition cycles from pulse output to the next pulse output, repetition counts, and the like.

By the camera control unit 605 setting predetermined values for the light emission control unit 502 via the communication unit 607 and the communication unit 503, pulse signals are output to the light emitting unit 501 at predetermined timing based on the reference signal, and the light emission periods of the light emitter 500 are controlled.

In this manner, the light emission control unit 502 performs light emission control based on the same signal as the reference signal input to the photoelectric conversion element 100. That is, the light emitting unit 501 performs pulse light emission for illuminating subjects in synchronization with the control signal CLK as a clock signal.

The communication unit 503 communicates with the communication unit 607 of the camera 600, receives setting information and the reference signal that the camera control unit 605 sends to the light emission control unit 502.

The ECU 701 includes a CPU as a computer and a memory that stores computer programs, and performs control of each part of the moving body 700 by causing the CPU to execute the computer programs stored in the memory.

An output of the ECU 701 is supplied to a vehicle control unit 702 and a display unit 703. The vehicle control unit 702 functions as movement control means that performs driving, stopping, direction control, and the like of a vehicle as the moving body based on an output of the ECU 701. In addition, the display unit 703 functions as display means, includes display elements such as liquid crystal devices, organic EL, and the like, for example, and is mounted on the moving body 700.

In the present embodiment, the ECU 701 receives information of recognition results from the recognition unit 604, and the ECU 701 can execute vehicle stop control (automatic braking and the like) according to the content of the recognition results. In addition, the ECU 701 receives color images and IR images from the image processing unit 603, and transmits the color images and IR images to the display unit 703 together with recognition results.

The display unit 703 displays various information with respect to images acquired by the photoelectric conversion element 100, recognition results by the recognition unit 604, traveling states of vehicles, and the like to the driver of the moving body 700 by using, for example, GUIs based on the outputs of the ECU 701.

It should be noted that the image processing unit 603, the recognition unit 604, and the like in FIG. 6 need not be mounted on the moving body 700, and the image processing unit 603, the recognition unit 604, and the like may be provided in external terminals and the like for remote controlling the moving body 700 or for monitoring the traveling of the moving body, and may be provided separately from the moving body 700.

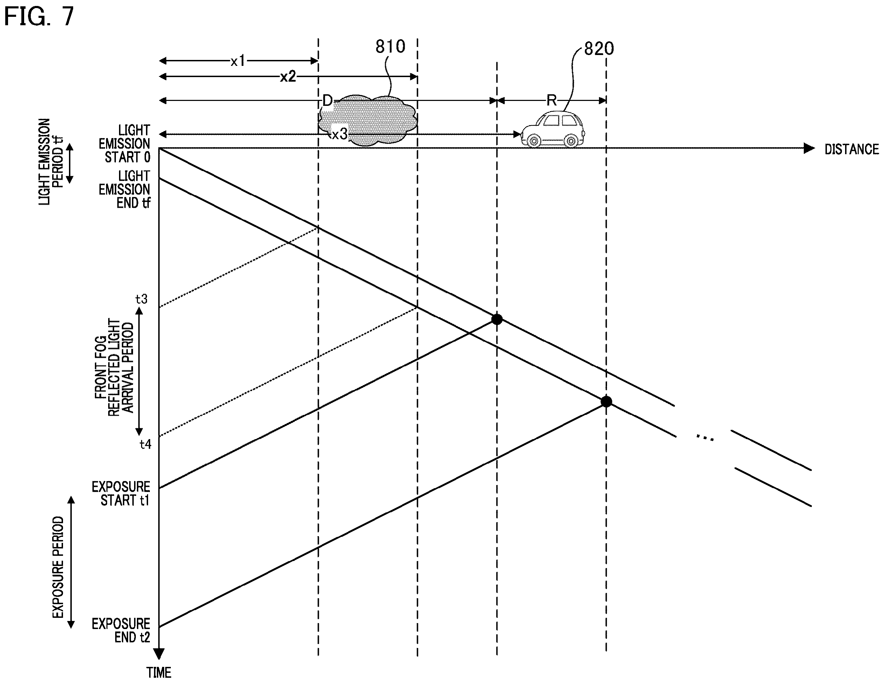

FIG. 7 is a diagram showing an example of the relationship among emission from light emitter 500, travel of the reflected light, and the exposure timing of camera 600 according to the First Embodiment. FIG. 7 shows distance on the horizontal axis and time on the vertical axis.

As shown in FIG. 7, in the present embodiment, an image of the target distance range (range gate image) is acquired by performing control (range gate control) that synchronizes light emission timing and exposure timing according to the target distance range.

It should be noted that in the present embodiment, a camera that acquires target distance images by range gate control in this manner is called a range gate camera.

First, an explanation will be provided with respect to the horizontal axis. In the example shown in FIG. 7, fog 810 exists between distance x1 and distance x2, and a vehicle 820 exists at distance x3. In addition, in FIG. 7, range gate control uses a position of distance D to the vehicle 820 that serves as a target as a starting point, and a range gate image of the target distance range R from the position is acquired.

In this case, the target distance range R becomes the target distance range to be captured. At this time, the vehicle 820 exists within the target distance range R.

Next, an explanation will be provided with respect to the vertical axis. Time 0 is set as the light emission start timing of the light emitter 500, and time tf is set as the light emission end timing. At this time, the light emission period becomes time tf. In addition, in a case in which range gate images are acquired in the range of the target distance range R using a position of distance D as a starting point, exposure start time is set as time t1, and exposure end time is set as time t2.

Time t1 is the timing at which radiated light emitted from the light emitter 500 at time 0 returns to the camera 600 as reflected light from an object at distance D. In addition, time t2 is the timing at which radiated light emitted from the light emitter 500 at time tf returns to the camera 600 as reflected light from an object at a distance (D+R).

Furthermore, the timing at which first reflected light from the fog 810 returns to the camera 600 is set as time t3, and the timing at which last reflected light from the fog 810 returns to the camera 600 is set as time t4.

In range gate control, exposure is not performed during a period from time t3 to time t4 when reflected light from the fog 810 reaches the camera 600. Then, by performing exposure only during a period from time t1 to time t2 when reflected light from the range extending from distance D through target distance range R arrives, an image of the vehicle 820 can be clearly acquired while removing the fog 810.

Here, an explanation will be provided with respect to the time until reflected light from a target object existing at distance x returns to the camera 600. The time until radiated light emitted from the light emitter 500 hits a target object existing at distance x and returns to the image-capturing unit as reflected light is set as time tr. At this time, the relationship between time tr until the reflected light returns and distance x to the target object to be captured becomes the following equation (1).

$$\text{Time tr} = 2x/\text{light speed c (approximately } 3\times108 \text{ m/s)...Equation (1)}$$

As shown in FIG. 7, when the target distance range R extending from distance D is set as the image-capturing range, the exposure timing time t1 of the starting point of a time range corresponding to the target distance range R can be obtained by the following equation (2) by substituting distance D for distance x in the above-described equation (1).

$$\text{Time t1} = 2D/\text{light speed c...Equation (2)}$$

In addition, the exposure timing time t2 of the ending point of the range can be obtained by the following equation (3) by substituting distance D + target distance range R for distance x in the above-described equation (1) and adding time tf to the result.

$$\text{Time t2} = \text{time tf} + 2(D+R)/\text{light speed c...Equation (3)}$$

In this manner, the time tf from light emission start to light emission end, the time t1 from light emission start to exposure start, and the time t2 until exposure end are controlled according to distance x (target distance range R) to be captured. Thereby, range gate control that can clearly image a subject within the target distance range is realized even when fog and the like exist between the camera and the target distance range.

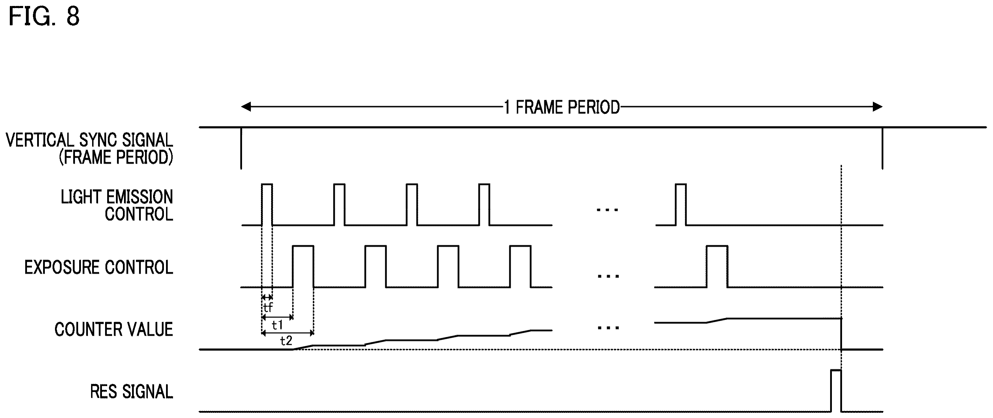

FIG. 8 is a timing chart explaining control operation for obtaining range gate images in one frame period according to the First Embodiment. In the present embodiment, range gate images are generated by exposure synchronized with light emission by the light emitter 500 as described above.

In FIG. 8, "vertical sync signal" indicates the frame cycle of image capture, and a period from a Low pulse to the next Low pulse is one frame period. "Light emission control" indicates the light emission timing of the light emitter 500, and light emission by the light emitter 500 is performed during the high level. "Exposure control" indicates a count period of the counter circuit, and photon count is performed by the counter circuit during the high level.

"Counter value" indicates the state of increase and decrease in the number of photons counted by the counter circuit. "RES signal" indicates a control pulse supplied to the counter circuit via the RES signal line 213, and the count values held in the counter circuit are reset by the pulse.

Next, an explanation will be provided with respect to range gate control for obtaining range gate images. In the present embodiment, the light emission period of light is controlled in a pulse manner by the light emission control unit 502, and photon count is performed only for reflected light from a predetermined target distance range.

In this manner, the light emission period from light emission start to end is set as time tf, the time from light emission start to exposure (photon count) start is set as time t1, and the time from light emission start to exposure (photon count) end is set as time t2.

At this time, time t1 indicates the period from the start of light emission until reflected light from the target distance range returns to the camera 600. In addition, the period from time t1 to time t2 is a period during which photon counts of reflected light from the target distance range are counted, and the period is the period from exposure start to exposure end. The counter values increase according to photon counts within the exposure period.

In order to correctly perform range gate control, synchronizing the timing of light emission start and exposure start according to a predetermined target distance range is necessary. In the present embodiment, the camera control unit 605 synchronizes the operation timing of both the counter circuit 211 and the light emission control unit 502 by transmitting the same reference signal to the counter circuit 211 and the light emission control unit 502.

In addition, as shown by "light emission control" on the timing chart of FIG. 8, a period from light emission start to next light emission start becomes one range gate operation cycle. Then, while counter values counted in one range gate operation cycle are held, counter values are cumulatively added in the next range gate operation cycle. It should be noted that a period from light emission to next light emission is set based on time until reflected light sufficiently attenuates and ceases to return to the camera 600.

As shown in FIG. 8, a predetermined plurality of times (for example, several hundreds to several tens of thousands of times) of range gate operation cycles set within one frame period are performed, and the count values of the counter circuit are cumulatively added each time. Then, the counter value information that was last cumulatively added within one frame period is sent from the counter circuit 211 to the memory circuit 212 by the RES signal, and thereafter the counter values are reset by the RES signal.

In this manner, in range gate control, because exposure periods are synchronized with light emission by the light emitter 500, clear images can be obtained for targeted ranges even under bad weather conditions such as fog.

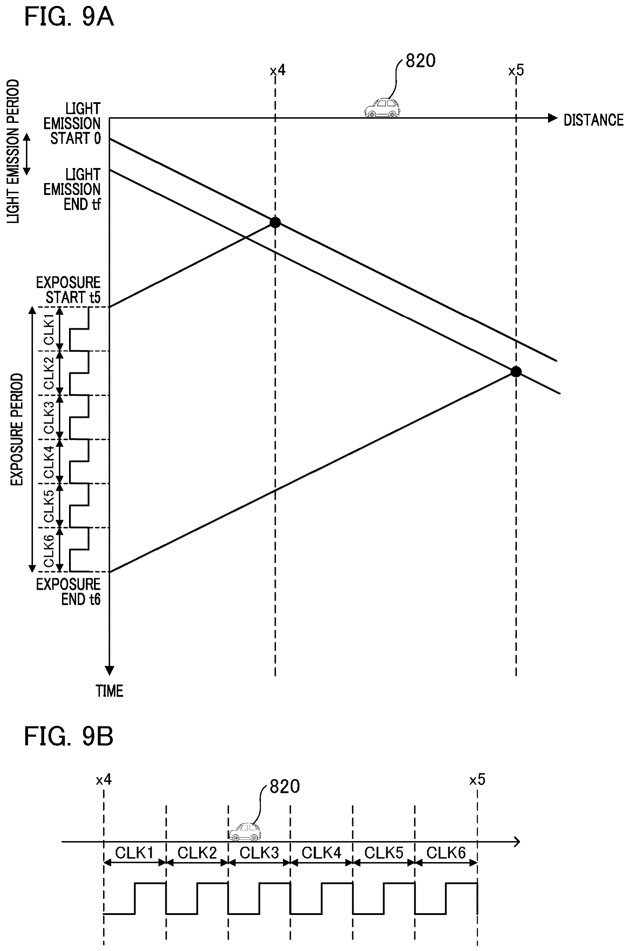

Next, FIG. 9A and FIG. 9B are diagrams for explaining a relationship between the control signal CLK and exposure timing according to the First Embodiment. FIG. 9 shows a relationship among radiated light from the light emitter 500, progress of reflected light thereof, and a range captured by the camera 600 through exposure when a range gate camera and a SPAD of a clocked recharging method are combined.

It should be noted that FIG. 9A is a diagram for explaining that reflected light from a specific distance range cannot be exposed during a recharge period by the clocked recharging method at the time of range gate image acquisition.

In FIG. 9, similarly to FIG. 7, distance is shown on the horizontal axis and time is shown on the vertical axis. In addition, time 0 is set as light emission start timing of the light emitter 500, and time tf is set as the light emission end timing. At this time, a light emission period becomes time tf. When distance x4 to distance x5 is set as a target distance range, exposure start time is set as time t5, and exposure end time is set as time t6. In addition, the vehicle 820 is assumed to exist within the target distance range.

During an exposure period from time t5 to time t6, using the clocked recharging method, a control signal CLK is applied to the switch 202 and a recharge operation is performed as explained in FIG. 4.

In FIG. 9A, an explanation is provided for a case in which there are six clocks between time t5 and time t6. Each clock is designated as CLK1, CLK2, CLK3, CLK4, CLK5, and CLK6, and the temporal timing of each clock is as shown on the vertical axis of FIG. 9A.

FIG. 9B is a diagram showing distance timing of CLK1 to CLK6. FIG. 9B displays only a portion corresponding to the target distance range in time t5 to time t6, wherein time t5 to time t6 is an exposure period on the vertical axis of FIG. 9A.

As described in the explanation of the clocked recharging method of FIG. 5, photons incident during the period from when the control signal CLK transitions to Low until the threshold voltage is exceeded by the recharge operation are not counted.

That is, for each of the six clocks from CLK1 to CLK6, because photons incident during the period before the threshold voltage is exceeded by recharge operation are not counted, exposure (the counting operation by the counter circuit 211) does not occur during those recharge periods when photons are not counted.

As shown in FIG. 9B, the duty ratio of clocks is 50:50, and a period until the threshold voltage is exceeded by recharge operation is assumed to be a period equivalent to the Low period of clocks. At this time, even when the control signal CLK is 30 MHz, which is the current maximum value, a cycle of CLK becomes 33.3 ns.

When considering light speed, light travels approximately 10 m in 33.3 ns. At this time, since the duty ratio of the clock is 50:50, the Low period corresponds to approximately 5 m of light travel distance for each clock cycle.

When a distance of approximately 5 m cannot be captured, as shown in FIG. 9B, one entire vehicle may not be completely exposed.

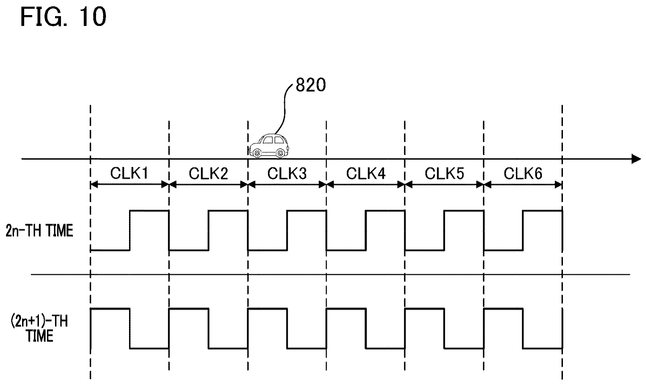

Next, FIG. 10 is a diagram showing an example of the relationship between light emission and the control signal CLK at each exposure timing according to the First Embodiment, and shows the relationship between the target distance range in the range gate operation and the control signal CLK similar to FIG. 9B.

As explained in FIG. 9B, when performing exposure within the target distance range, assuming there are six control signal CLK cycles, photons cannot be counted during the period from when the control signal CLK transitions to Low until the threshold voltage is exceeded by the recharge operation.

Accordingly, image capture cannot be performed in that range. However, in the range gate camera, as explained in FIG. 8, for acquiring one range gate image, exposure operations are repeated for hundreds to tens of thousands of range gate operation cycles, and images are acquired by cumulatively adding the count values obtained from these exposure operations.

That is, in the present embodiment, for capturing images of a subject existing in a predetermined image-capturing distance range, a plurality of exposure operations (counting operations) are performed by the counter circuit 211 in accordance with the timing of pulse light emission and the predetermined image-capturing distance range.

It should be noted that, as in FIG. 10, the duty ratio of the clock may be 50:50 and the period until exceeding the threshold voltage by the recharge operation may be equivalent to the Low period of CLK. In that case, acquisition of images in the entire target distance range becomes possible by changing the phase of the control signal CLK by 180° between the 2nth (even-numbered) exposure period and the 2n+1th (odd-numbered) exposure period.

That is, in the present embodiment, the timing of light emission and exposure based on the control signal CLK changes by the control signal CLK being shifted by half phase between the even-numbered exposure periods and the odd-numbered exposure periods.

In this manner, in the present embodiment, a control step of shifting the relative timing between the control signal CLK as a clock signal and pulse light emission by a predetermined phase for each predetermined exposure operation is executed. Thereby, in the range gate control, photon count omission in the predetermined image-capturing range can be prevented.

In addition, although in FIG. 10 an explanation was provided that the phase is shifted by 180° between the even-numbered exposure periods and the odd-numbered exposure periods, how much phase is shifted and at what cycle may be arbitrarily set according to the period until exceeding the threshold voltage by the recharge operation and the frequency of the clock. That is, the above-described predetermined phase may be set based on the ratio between the cycle of the control signal CLK as the clock signal and the period of the recharge state of the avalanche photodiode.

For example, in a case in which the relationship between the period until exceeding the threshold voltage by the recharge operation and the cycle of one clock is 1:4, images in the entire target distance range can be acquired evenly by shifting by 1/4 phase each at the 4nth, 4n+1th, 4n+2th, and 4n+3th exposure periods.

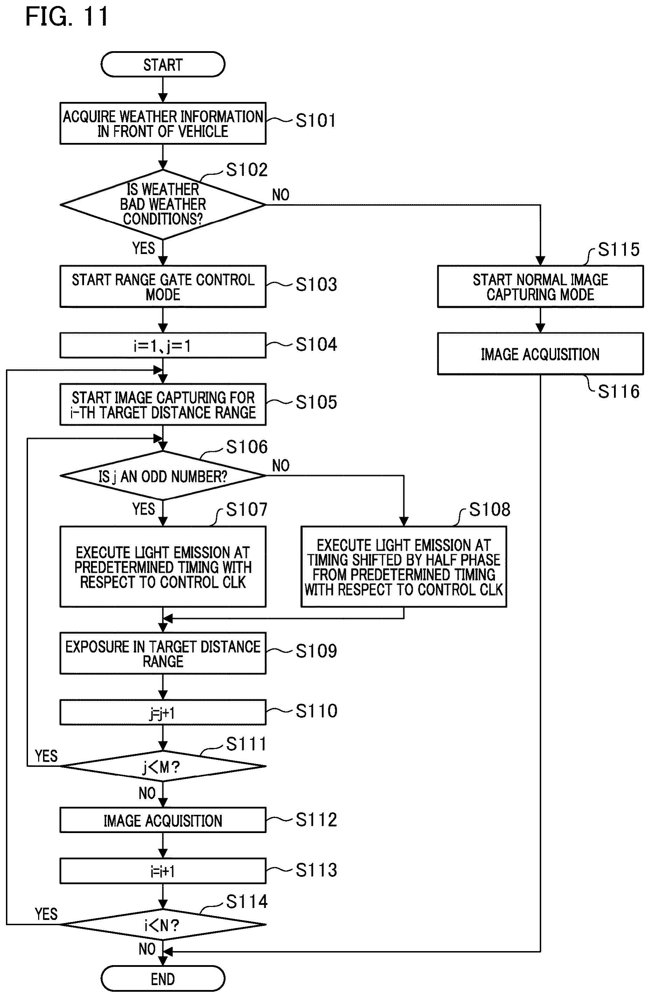

FIG. 11 is a flowchart showing details of an operation example of the image-capturing method according to the First Embodiment. In the present flowchart, each step from step S101 to step S116 is sequentially executed by a CPU or the like as a computer in the camera control unit 605 executing a computer program stored in a memory.

In step S101 of FIG. 11, the camera control unit 605 acquires weather information by causing the recognition unit 604 of the camera 600 to determine weather conditions (clear, rain, fog, and the like) in front of the vehicle, and the process proceeds to step S102.

In step S102, the camera control unit 605 performs determination of whether or not the weather information acquired in step S101 indicates bad weather conditions. In a case in which bad weather conditions are determined, the process proceeds to step S103. In a case in which bad weather conditions are not determined, the process proceeds to step S115.

In step S103, the camera control unit 605 starts the range gate control mode. That is, the camera control unit 605 sets the camera 600 to the range gate control mode, and sends a control signal to the light emitter 500 via the communication unit 607 to set the light emitter 500 to the range gate control mode. Thereafter, the process proceeds to step S104.

In step S104, the camera control unit 605 sets i=1 and j=1, and the process proceeds to step S105.

In step S105, the camera control unit 605 starts image capture of the i-th target distance range among N target distance ranges during image capture in the range gate control mode. Thereafter, the process proceeds to step S106.

In step S106, the camera control unit 605 performs determination of whether or not j is an odd number. In this context, j indicates the j-th exposure operation among predetermined exposure operations (hundreds to tens of thousands of times) within one frame period that are set in the range gate control.

In a case in which j is an odd number, the process proceeds to step S107, and in a case in which j is an even number, the process proceeds to step S108. In the present embodiment, according to the determination result in step S106, whether or not to shift the light emission timing by half phase with respect to the control signal CLK that is applied to the switch 202 is changed. That is, for each exposure period, the control signal CLK is alternately shifted by half phase.

In step S107, light emission is executed at a predetermined timing with respect to the control signal CLK. That is, the camera control unit 605 causes the light emitter 500 to emit light at normal timing without shifting the light emission timing by half phase with respect to the control signal CLK that is applied to the switch 202. After completion of light emission of the light emitter 500, the process proceeds to step S109.

In step S108, light emission is executed at timing shifted by half phase from the predetermined timing with respect to the control signal CLK. That is, the camera control unit 605 causes the light emitter 500 to emit light at timing shifted by half phase with respect to the light emission timing for the control signal CLK that is applied to the switch 202. After completion of light emission of the light emitter 500, the process proceeds to step S109.

In step S109, exposure is performed in the target distance range. That is, the camera control unit 605 performs exposure (counting operation by the counter circuit 211) in the image-capturing unit 602 at the timing according to the target distance range. After completion of exposure, the process proceeds to step S110.

In step S110, the camera control unit 605 sets j=j+1 to increment j by 1, and the process proceeds to step S111.

In step S111, determination is performed of whether or not j<M. That is, the camera control unit 605 determines whether or not M exposures, which are predetermined exposure operations within one target distance range in the range gate control, have been reached. In a case in which No is determined in step S111, that is, in a case in which M exposures have been reached, the process proceeds to step S112. In a case in which Yes is determined in step S111, that is, in a case in which M exposures have not been reached, the process returns to step S106.

In step S112, an image is acquired. That is, the image-capturing unit 602 generates image data based on cumulative count values by M exposure operations, and sends the image data to the image processing unit 603. After completion of image processing in the image processing unit 603, data is transferred from the image processing unit 603 to the subsequent recognition unit 604 and ECU 701. Thereafter, the process proceeds to step S113.

In step S113, the camera control unit 605 sets i=i+1 to increment i by 1, and the process proceeds to step S114.

In step S114, determination is performed of whether or not i<N. That is, determination is performed of whether or not all N target distance ranges set by the camera control unit 605 have been completed. In a case in which Yes is determined in step S114, that is, in a case in which i is less than N, the process returns to step S105, and in a case in which No is determined in step S114, that is, in a case in which i is greater than or equal to N, the processing flow of FIG. 11 is ended.

In step S115, the normal image-capturing mode is started. That is, the camera control unit 605 transmits a control signal to operate in the normal image-capturing mode. After starting image capture in the normal image-capturing mode, the process proceeds to step S116.

It should be noted that the normal image-capturing mode herein refers to a mode in which images are generated by capturing images by performing counting operations (exposure operations) by the counter circuit 211 for only a predetermined exposure period within one frame period without performing light emission by the light emission unit.

In step S116, an image is acquired. That is, the image-capturing unit 602 sends captured image data to the image processing unit 603. After completion of image processing in the image processing unit 603, data is transferred from the image processing unit 603 to the subsequent recognition unit 604 and ECU 701. Thereafter, the processing flow of FIG. 11 is ended.

It should be noted that, although the flowchart of FIG. 11 describes an example of shifting by half phase, as described in FIG. 10, how much phase is shifted and at what cycle may be arbitrarily set according to the ratio between the cycle of the control signal CLK and the recharge period.

In addition, although in the present embodiment the phase was changed for each exposure operation, the frequency of changing need not necessarily be for each exposure operation. The phase may be changed at intervals of multiple exposure operations, or the phase may be changed between a first half portion and a second half portion of the total number of exposure operations.

Furthermore, although in the present embodiment the half phase shift was achieved by changing the timing of light emission with the control signal CLK as a reference, the timing of light emission may be kept constant and the control signal CLK may be changed for each light emission.

In this manner, according to the present embodiment, in the range gate camera using the SPAD of the clocked recharging method, even when range gate control is performed, distance ranges that cannot be captured due to the recharge period are less likely to occur, and image quality of the entire screen can be improved.

<Second Embodiment>

Hereinafter, an explanation will be provided with respect to a Second Embodiment of the present disclosure. In the First Embodiment, an explanation was provided with respect to a method using a SPAD sensor of a clocked recharging method. In the Second Embodiment, an explanation will be provided with respect to a case of using a sensor that can acquire two images having parallax and perform stereo distance measurement by further having two photoelectric conversion units in one pixel in a SPAD sensor of a clocked recharging method.

It should be noted that the functional block diagram in the Second Embodiment is substantially the same as the functional block diagram described in FIG. 6, and the image-capturing unit 602 is changed to a SPAD sensor having a structure that has two photoelectric conversion units in one pixel.

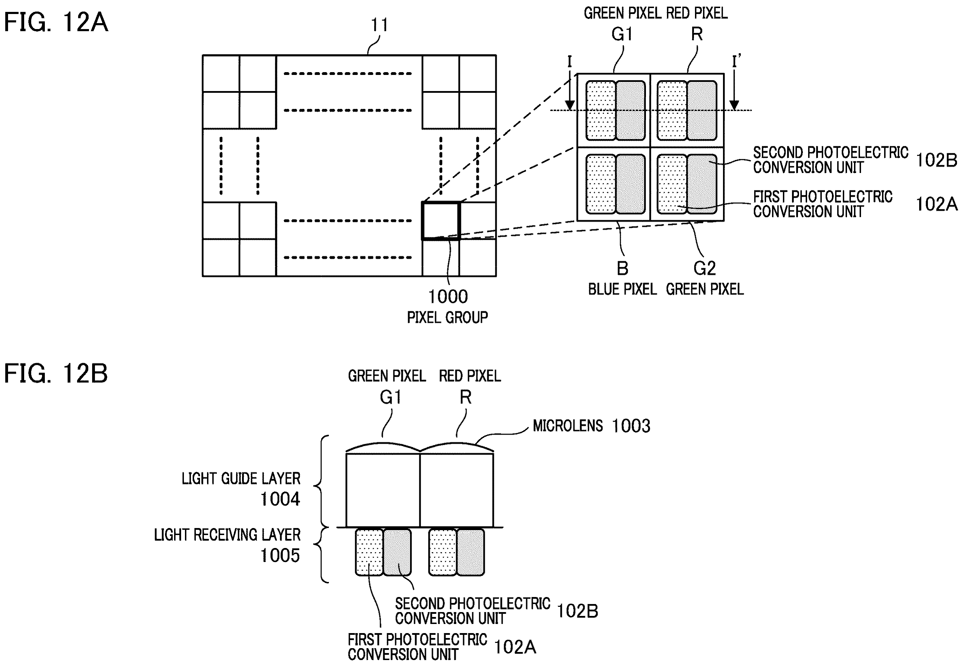

FIG. 12A and FIG. 12B are diagrams showing a configuration example of an image capturing element having two photoelectric conversion units in one pixel according to the Second Embodiment. FIG. 12A is a top view of the sensor substrate 11 viewed from an incident direction of light. The sensor substrate 11 is configured by arranging in a matrix manner a plurality of pixel groups 1000 composed of four pixels of 2 rows × 2 columns.

The pixel group 1000 has a green pixel G1 that detects green light, a green pixel G2 that detects green light, a red pixel R that detects red light, and a blue pixel B that detects blue light. In the pixel group 1000, the green pixel G1 and the green pixel G2 are disposed diagonally.

In addition, each pixel has a first photoelectric conversion unit 102A and a second photoelectric conversion unit 102B that receive light from mutually different pupils. Control of the first photoelectric conversion unit 102A and the second photoelectric conversion unit 102B can be controlled independently.

FIG. 12B is a cross-sectional diagram in an I-I' cross section of the pixel group 1000 in FIG. 12A. Each pixel is configured by a microlens 1003, a light guide layer 1004, and a light receiving layer 1005.

The light guide layer 1004 includes a microlens 1003 for efficiently guiding light flux incident on pixels to the light receiving layer 1005, a color filter that allows light of wavelength bands corresponding to the colors of light detected by each pixel to pass, and a light guide member having wiring for image readout and pixel driving.

The light receiving layer 1005 is a photoelectric conversion unit that outputs as electrical signals by photoelectrically converting light incident via the light guide layer 1004, and the light receiving layer 1005 has a first photoelectric conversion unit 102A and a second photoelectric conversion unit 102B.

In addition, in the above-described explanation, although the pixel group 1000 was disposed as a green pixel G1, a green pixel G2, a red pixel R, and a blue pixel B as shown in FIG. 12A, the pixel group 1000 is not limited thereto with respect to the disposition, and an infrared pixel IR and the like that receives infrared light may be disposed, and the order of disposition is also not limited.

It should be noted that in the following explanation, the output of the first photoelectric conversion unit 102A is called a first photoelectric conversion signal, and the output of the second photoelectric conversion unit 102B is called a second photoelectric conversion signal. In addition, an image signal generated by first photoelectric conversion signals of a plurality of pixels is called a first image signal, and an image signal generated from second photoelectric conversion signals of a plurality of pixels is called a second image signal.

It should be noted that because the first photoelectric conversion unit 102A and the second photoelectric conversion unit 102B each perform photoelectric conversion by receiving light from mutually different exit pupils of an imaging lens via microlenses, the first photoelectric conversion signal and the second photoelectric conversion signal have parallax. Accordingly, the first image signal and the second image signal have phase differences according to parallax amounts (positional deviation amounts), and distances to subjects can be calculated based on the phase differences. In addition, when acquiring images for display, the first image signal and the second image signal are added.

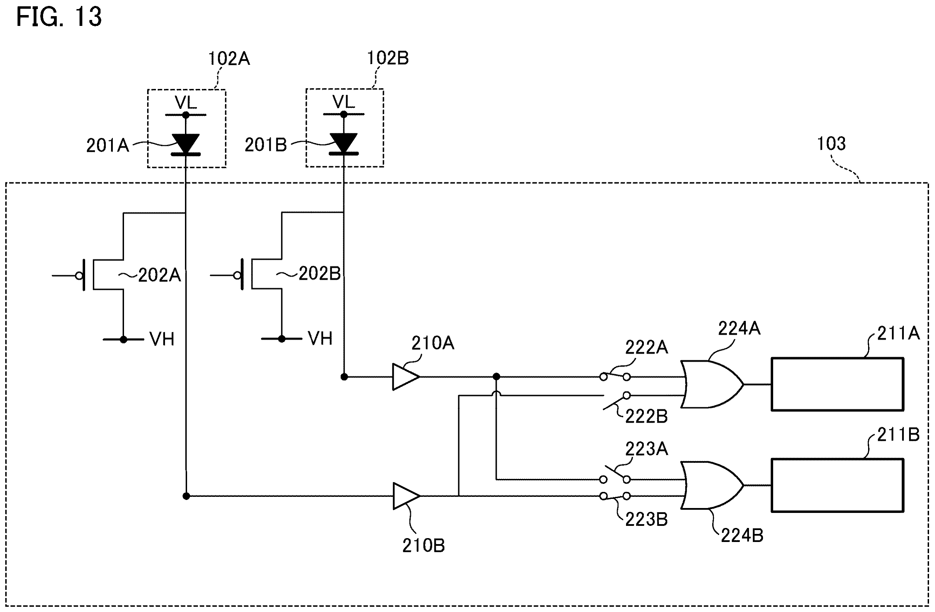

FIG. 13 is a diagram showing an equivalent circuit of the signal processing circuit corresponding to one pixel in the pixel group 1000 in FIG. 12. Although the equivalent circuit is basically similar to the equivalent circuit shown in FIG. 4, because one pixel has a first photoelectric conversion unit 102A and a second photoelectric conversion unit 102B, two sets each comprising an APD, a switch, a waveform shaping unit, and a counter circuit are provided in the pixel.

That is, 201A is an APD included in the first photoelectric conversion unit 102A, and 201B is an APD included in the second photoelectric conversion unit 102B. In addition, a switch 202A is connected to a cathode of the APD 201A, a switch 202B is connected to a cathode of the APD 201B, a waveform shaping unit 210A is connected to a cathode of the APD 201A, and a waveform shaping unit 210B is connected to a cathode of the APD 201B.

A pixel switch 222A, a pixel switch 222B, a pixel switch 223A, and a pixel switch 223B are pixel switches. The pixel switch 222A, the pixel switch 222B, the pixel switch 223A, and the pixel switch 223B switch whether to supply a first photoelectric conversion signal to each counter, whether to supply a second photoelectric conversion signal to each counter, or whether to supply both the first photoelectric conversion signal and the second photoelectric conversion signal to each counter.

In addition, a counter circuit 211A is connected to an output of an OR circuit 224A, and a counter circuit 211B is connected to an output of an OR circuit 224B. It should be noted that the counter circuit 211A functions as a first counter capable of counting outputs of the first photoelectric conversion unit, and the counter circuit 211B functions as a second counter capable of counting outputs of the second photoelectric conversion unit. An output of the OR circuit 224A is connected to the counter circuit 211A, and an output of the OR circuit 224B is connected to the counter circuit 211B.

It should be noted that the pixel switch 222A, the pixel switch 222B, the pixel switch 223A, and the pixel switch 223B selectively connect outputs of the first photoelectric conversion unit to the first counter and outputs of the second photoelectric conversion unit to the second counter as described above.

For example, in a case in which the first photoelectric conversion signal is counted by the counter circuit 211A, the pixel switch 222A is turned ON, and the pixel switch 222B is turned OFF. In addition, in a case in which the second photoelectric conversion signal is counted by the counter circuit 211A, the pixel switch 222B is turned ON, and the pixel switch 222A is turned OFF.

In this manner, the present embodiment has a first switching state in which pixel switches connect one output from the first photoelectric conversion unit to the first counter and connect the other output from the second photoelectric conversion unit to the second counter.

In a case in which both the first photoelectric conversion signal and the second photoelectric conversion signal are counted by the counter circuit 211A, the pixel switch 222A and the pixel switch 222B are turned ON. The same applies with respect to the counter circuit 211B.

In this manner, the present embodiment has a second switching state in which, by pixel switches, both the output of the first photoelectric conversion unit and the output of the second photoelectric conversion unit are connected to, for example, the first counter.

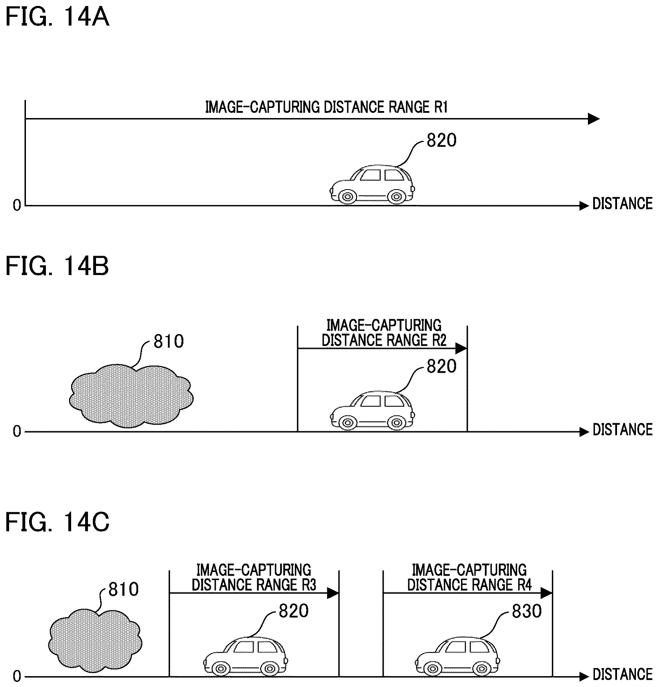

FIG. 14A to FIG. 14C are diagrams for explaining examples of operation modes when using an image capturing element having two photoelectric conversion units in one pixel. FIG. 14A is a diagram showing a mode that performs distance measurement while capturing an entirety (image-capturing range R1) in a normal image-capturing mode.

In the normal image-capturing mode, only a pixel switch 222A and a pixel switch 223B explained in FIG. 13 are turned ON. Thereby, a counter circuit 211A acquires a first photoelectric conversion signal, and a counter circuit 211B acquires a second photoelectric conversion signal, and furthermore, subject distance data is acquired based on a phase difference of a first image signal and a second image signal from a plurality of pixels.

That is, subject distance can be calculated based on the output of the first counter and the output of the second counter in the above-described first switching state.

In contrast, when acquiring images for display, an image obtained by adding a first image signal and a second image signal can be acquired by adding count values of a counter circuit 211A and a counter circuit 211B. That is, display images can be generated based on, for example, the output of a first counter in the above-described second switching state.

FIG. 14B is a diagram explaining an example of performing range gate control and acquiring an image of only a range of an image-capturing range R2. Subject distance data can be acquired by acquiring both a first image signal and a second image signal within a range of the image-capturing range R2.

In a case of the mode as well, similarly to FIG. 14A, only a pixel switch 222A and a pixel switch 223B explained in FIG. 13 are turned ON, and a first photoelectric conversion signal is acquired by the counter circuit 211A, and a second photoelectric conversion signal is acquired by the counter circuit 211B.

Then, a first image signal is generated based on the output of a counter circuit 211A of a plurality of pixels, and a second image signal is generated based on the output of a counter circuit 211B of a plurality of pixels, and subject distance data is calculated based on a phase difference of the first image signal and the second image signal.

In addition, in the Second Embodiment, in a case in which a clocked recharging method is used, similarly to the First Embodiment, operation is performed so that a range that cannot be captured does not occur by changing the phase of light emission timing with respect to a control signal CLK.

FIG. 14C is a diagram showing an example of acquiring target distance ranges at two locations simultaneously by using range gate control. The number of light emissions can be reduced by simultaneously acquiring target distance ranges at two locations. In addition, this provides the advantage that a target distance range per location can be narrowed further.

In the present embodiment, in a case in which image capture is performed with respect to target distance ranges at two locations in this manner, both a first photoelectric conversion signal and a second photoelectric conversion signal are counted with respect to each target distance range by a counter circuit 211A and a counter circuit 211B. Then, images corresponding to each target distance range are acquired based on count values of the counter circuit 211A and the counter circuit 211B.

For example, an image-capturing range R3 is assumed to be acquired by a counter circuit 211A, and an image-capturing range R4 is assumed to be acquired by a counter circuit 211B. At this time, at the timing of exposing a range of the image-capturing range R3, a pixel switch 222A and a pixel switch 222B are both turned ON, and at timing of exposing a range of the image-capturing range R4, a pixel switch 223A and a pixel switch 223B are both turned ON.

At this time, as explained in the First Embodiment as well, operation is performed so that a range that cannot be captured does not occur by changing a phase of light emission timing with respect to a control signal CLK. However, as shown in FIG. 14C, in a case in which a first photoelectric conversion signal and a second photoelectric conversion signal are counted by one counter, in a clocked recharging method, there are cases in which count omission occurs.

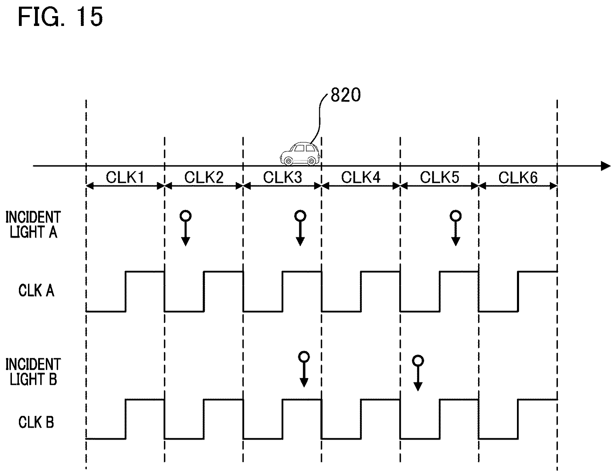

That is, in a case in which photons enter the first photoelectric conversion unit 102A and the second photoelectric conversion unit 102B simultaneously within the same clock, count omission occurs. The details of the count omission are illustrated and explained in FIG. 15.

FIG. 15 is a diagram showing problems arising when both the first and second photoelectric conversion signals are counted, and shows a relationship between a target distance range and a control signal CLK. Incident light to a first photoelectric conversion unit 102A is set as incident light A, and incident light to a second photoelectric conversion unit 102B is set as incident light B.

Control signals CLK to each photoelectric conversion unit are designated as CLK A and CLK B. At this time, in a clocked recharging method, as explained in the First Embodiment, a problem exists in which photons incident during the Low period of clocks cannot be counted.

In addition, when counting both a first photoelectric conversion signal and a second photoelectric conversion signal, as shown in a range of CLK3 of FIG. 15, there are cases in which photons of incident light A are simultaneously incident on a first photoelectric conversion unit 102A and photons of incident light B are simultaneously incident on a second photoelectric conversion unit 102B within the same clock. In that case, because only one count can be performed within the same clock, count omission occurs.

Particularly at locations in which objects exist, when the count omission occurs frequently, the original count numbers are not matched, and an image having a poor S/N ratio results.

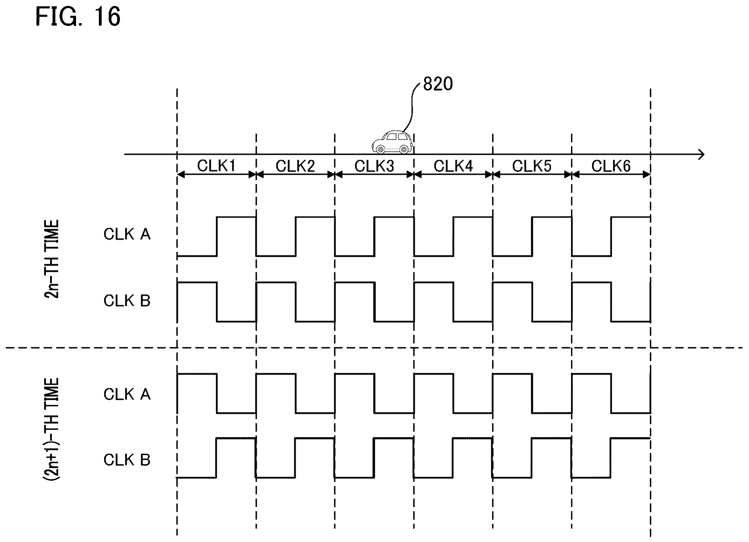

In contrast, FIG. 16 is a diagram showing an example of a method for solving the problems explained in FIG. 15, and shows an example of a relationship of light emission timing with respect to a control signal CLK in the context of a control signal CLK and each exposure timing in each photoelectric conversion unit according to the Second Embodiment.

First, in order to prevent image-capturing range omission during the Low period, similar to the First Embodiment, image-capturing range omission can be prevented by shifting light emission timing of a light emitter 500 by half phase in a 2nth exposure period and a 2n+1th exposure period.

Furthermore, in order to prevent count omission, in a 2nth exposure period and a 2n+1th exposure period, light emission timing is shifted by half phase, and a control signal CLK applied to a first photoelectric conversion unit 102A and a control signal CLK applied to a second photoelectric conversion unit 102B are shifted by half phase.

That is, as shown in FIG. 16, in a 2nth exposure period, the control signal CLK A applied to the first photoelectric conversion unit 102A and the control signal CLK B applied to the second photoelectric conversion unit 102B are shifted by half phase. It should be noted that the shift is not limited to half phase. That is, clock signals supplied to the avalanche photodiodes of the first photoelectric conversion unit and the avalanche photodiodes of the second photoelectric conversion unit may be controlled so as to shift phases thereof by a predetermined phase.

In addition, the control signal CLK A in a 2nth exposure period and the control signal CLK A in a 2n+1th exposure period are shifted by half phase, and the control signal CLK B in a 2nth exposure period and the control signal CLK B in a 2n+1th exposure period are shifted by half phase. Thereby, count omission can be reduced.

It should be noted that, similar to the First Embodiment, FIG. 15 and FIG. 16 explain an example in which a duty ratio of the control signal CLK is set to 50:50, and time until exceeding a threshold value by recharge operation is the same time as the Low period of CLK.

Accordingly, although an explanation was provided that phase is shifted by half phase between even-numbered exposure periods and odd-numbered exposure periods, how much phase is shifted and at what cycle may be arbitrarily changed according to a ratio between a cycle of the control signal CLK and a recharge period.

For example, in a case in which a ratio between a cycle of the control signal CLK and a recharge period is 25:75, by shifting phase by 1/4 at a 4nth time, a 4n+1th time, a 4n+2th time, and a 4n+3th time, images in an entire region can be acquired evenly.

In addition, although phase was changed for each exposure operation in the present case, frequency of changing need not necessarily be for each exposure operation. Phase may be changed at intervals of multiple exposure operations, or phase may be changed between a first half portion and a second half portion among total numbers of exposure operations.

Furthermore, although the present embodiment explained an example of shifting by half phase by changing timing of light emission based on the control signal CLK, timing of light emission may be kept constant, and the control signal CLK may be changed for each light emission.

In addition, relative timing of pulse light emission may be shifted by a predetermined phase for each exposure operation with respect to the fixed clock signal. In addition, relative timing of the clock signal and pulse light emission may be shifted by a predetermined phase for each exposure operation or at intervals of predetermined numbers of exposure operations or between exposure operations in a first half and exposure operations in a second half of a frame period.

In addition, based on a ratio between a cycle of the clock signal and a period of a recharge state, a predetermined plurality of pulse light emission timings may be performed at a predetermined phase, and a subsequent plurality of pulse light emission timings may be cyclically shifted at a plurality of phases according to a duty cycle of the clock signal.

In addition, the timing of the pulse light emission may be kept constant, and the duty cycle of the clock signal may be controlled so as to be changed according to the timing of the pulse light emission.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the image capturing apparatus and the like through a network or various storage media. Then, a computer (or a CPU, an MPU, or the like) of the image capturing apparatus and the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-153665, filed on September 6, 2024, which is hereby incorporated by reference herein in its entirety.

**Claims**

1. An image capturing apparatus comprising:

   a photoelectric conversion element having a plurality of pixels, wherein the pixels each comprise a sensor unit comprising an avalanche photodiode configured to generate pulses in response to photons incident thereon, a counter configured to count the number of the pulses, a memory configured to store count values of the counter, and a switch configured to switch the avalanche photodiode between a standby state in which avalanche multiplication is possible and a recharge state;
   a signal generation unit configured to supply a clock signal to the switch;
   a light emitting unit configured to perform pulse light emission for illuminating a subject in synchronization with the clock signal; and
   a control unit configured to perform a plurality of exposure operations by the counter according to timing of the pulse light emission and a predetermined image-capturing distance range for capturing images of a subject existing in the predetermined image-capturing distance range, and to shift relative timing of the clock signal and the pulse light emission by a predetermined phase for each predetermined exposure operation.

2. The image capturing apparatus according to claim 1, wherein the predetermined phase is set based on a ratio between the cycle of the clock signal and the period of the recharge state of the avalanche photodiode.

3. The image capturing apparatus according to claim 1 or claim 2, wherein the pixels comprise:

   a first photoelectric conversion unit and a second photoelectric conversion unit configured to respectively receive light from mutually different pupils;
   a first counter capable of counting the output of the first photoelectric conversion unit and a second counter capable of counting the output of the second photoelectric conversion unit; and
   a pixel switch configured to selectively connect the output of the first photoelectric conversion unit to the first counter and the output of the second photoelectric conversion unit to the second counter.

4. The image capturing apparatus according to claim 3, wherein the control unit is configured to shift phases of the clock signals supplied to the avalanche photodiode of the first photoelectric conversion unit and the avalanche photodiode of the second photoelectric conversion unit.

5. The image capturing apparatus according to claim 3 or claim 4, comprising a first switching state wherein the pixel switch connects one of the output of the first photoelectric conversion unit and the output of the second photoelectric conversion unit to the first counter, and connects the other to the second counter.

6. The image capturing apparatus according to claim 5, wherein the control unit is configured to calculate subject distance based on the output of the first counter and the output of the second counter in the first switching state.

7. The image capturing apparatus according to any one of claims 3 to 6, comprising a second switching state in which, by the pixel switch, both the output of the first photoelectric conversion unit and the output of the second photoelectric conversion unit are connected to the first counter.

8. The image capturing apparatus according to claim 7, wherein the control unit is configured to generate a display image based on the output of the first counter in the second switching state.

9. The image capturing apparatus according to any one of claims 1 to 8, wherein the control unit is configured to shift relative timing of the pulse light emission by a predetermined phase for each exposure operation with respect to the fixed clock signal.

10. The image capturing apparatus according to any one of claims 1 to 9, wherein the control unit is configured to shift relative timing of the clock signal and the pulse light emission by a predetermined phase for each of the exposure operations, or at intervals of predetermined numbers of exposure operations, or between exposure operations of a first half and exposure operations of a second half.

11. The image capturing apparatus according to any one of claims 1 to 10, wherein the control unit is configured to perform a predetermined plurality of pulse light emission timings at a predetermined phase based on a ratio between cycle of the clock signal and period of the recharge state, and to cyclically shift a subsequent plurality of pulse light emission timings at a plurality of phases according to the duty cycle of the clock signal.

12. The image capturing apparatus according to any one of claims 1 to 11, wherein the control unit is configured to keep the timing of the pulse light emission constant, and to change the duty cycle of the clock signal according to the timing of the pulse light emission.

13. An image-capturing method using an image capturing apparatus comprising a plurality of pixels, wherein the pixels each comprise a sensor unit comprising an avalanche photodiode configured to generate pulses in response to photons incident thereon, a counter configured to count the number of the pulses, a memory configured to store count values of the counter, and a switch configured to switch the avalanche photodiode between a standby state in which avalanche multiplication is possible and a recharge state,

wherein the image capturing apparatus comprises a signal generation unit configured to supply a clock signal to the switch and a light emitting unit configured to perform pulse light emission for illuminating a subject in synchronization with the clock signal, and
wherein the image-capturing method comprises performing a plurality of exposure operations by the counter according to timing of the pulse light emission and a predetermined image-capturing distance range for capturing images of a subject existing in the predetermined image-capturing distance range, and shifting relative timing of the clock signal and the pulse light emission by a predetermined phase for each of the exposure operations.

14. A computer program to control an image capturing apparatus,

wherein the image capturing apparatus comprises a plurality of pixels, wherein the pixels each comprise a sensor unit comprising an avalanche photodiode configured to generate pulses in response to photons incident thereon, a counter configured to count the number of the pulses, a memory configured to store count values of the counter, and a switch configured to switch the avalanche photodiode between a standby state in which avalanche multiplication is possible and a recharge state,
wherein the computer program includes instructions for executing the following process:
performing a plurality of exposure operations by the counter according to timing of the pulse light emission and a predetermined image-capturing distance range for capturing images of a subject existing in the predetermined image-capturing distance range, and shifting relative timing of the clock signal and the pulse light emission by a predetermined phase for each of the predetermined exposure operations.

FIG. 1

FIG. 2

FIG. 3

FIG. 4

EP 4 708 899 A1

# FIG. 5

## FIG. 6

FIG. 7

# FIG. 8

EP 4 708 899 A1

## FIG. 9A

## FIG. 9B

FIG. 10

820

|  | CLK1 | CLK2 | CLK3 | CLK4 | CLK5 | CLK6 |

2n-TH TIME

(2n+1)-TH TIME

## FIG. 11

```
                    ┌─────────────┐
                    │    START    │
                    └──────┬──────┘
                           ▼
          ┌──────────────────────────────────┐
          │ ACQUIRE WEATHER INFORMATION      │──S101
          │      IN FRONT OF VEHICLE         │
          └──────────────┬───────────────────┘
                         ▼  S102
                 ◇ IS WEATHER ◇   NO
                 ◇ BAD WEATHER ◇ ─────────────────────┐
                 ◇ CONDITIONS? ◇                      │
                     │ YES                            ▼ S115
                     ▼                   ┌──────────────────────────┐
          ┌─────────────────────┐       │  START NORMAL IMAGE      │
          │ START RANGE GATE     │─S103  │   CAPTURING MODE         │
          │   CONTROL MODE       │       └────────────┬─────────────┘
          └──────────┬──────────┘                     ▼
                     ▼                   ┌──────────────────────────┐
          ┌─────────────────────┐       │   IMAGE ACQUISITION      │
          │     i=1, j=1         │─S104  └────────────┬─────────────┘
          └──────────┬──────────┘                    S116
                     ▼
          ┌─────────────────────┐
          │ START IMAGE CAPTURING│─S105
          │ FOR i-TH TARGET      │
          │ DISTANCE RANGE       │
          └──────────┬──────────┘
                     ▼  S106
              ◇ IS j AN ODD ◇    NO
              ◇  NUMBER?   ◇ ──────────────┐
                 │ YES                     │
                 ▼ S107                    ▼ S108
      ┌────────────────────────┐  ┌────────────────────────┐
      │ EXECUTE LIGHT EMISSION │  │ EXECUTE LIGHT EMISSION │
      │ AT PREDETERMINED TIMING│  │ AT TIMING SHIFTED BY   │
      │ WITH RESPECT TO        │  │ HALF PHASE FROM        │
      │ CONTROL CLK            │  │ PREDETERMINED TIMING   │
      │                        │  │ WITH RESPECT TO        │
      │                        │  │ CONTROL CLK            │
      └───────────┬────────────┘  └───────────┬────────────┘
                  ▼◄────────────────────────────
      ┌────────────────────────┐
      │ EXPOSURE IN TARGET      │─S109
      │    DISTANCE RANGE       │
      └───────────┬────────────┘
                  ▼
      ┌────────────────────────┐
      │        j=j+1           │─S110
      └───────────┬────────────┘
                  ▼  S111
    YES     ◇   j<M?   ◇
   ◄────────◇          ◇
                  │ NO
                  ▼
      ┌────────────────────────┐
      │   IMAGE ACQUISITION    │─S112
      └───────────┬────────────┘
                  ▼
      ┌────────────────────────┐
      │        i=i+1           │─S113
      └───────────┬────────────┘
                  ▼  S114
    YES     ◇   i<N?   ◇
   ◄────────◇          ◇
                  │ NO
                  ▼
          ┌─────────────┐
          │     END     │
          └─────────────┘
```

# FIG. 12A

11

GREEN PIXEL RED PIXEL
G1          R

I                    I'

SECOND PHOTOELECTRIC 102B
CONVERSION UNIT

FIRST PHOTOELECTRIC 102A
CONVERSION UNIT

B          G2
BLUE PIXEL  GREEN PIXEL

1000
PIXEL GROUP

# FIG. 12B

GREEN PIXEL   RED PIXEL
G1            R

MICROLENS 1003

LIGHT GUIDE LAYER
1004

LIGHT RECEIVING LAYER
1005

SECOND PHOTOELECTRIC 102B
CONVERSION UNIT

FIRST PHOTOELECTRIC 102A
CONVERSION UNIT

EP 4 708 899 A1

FIG. 13

FIG. 14A

IMAGE-CAPTURING DISTANCE RANGE R1

820

0 → DISTANCE

FIG. 14B

810

IMAGE-CAPTURING
DISTANCE RANGE R2

820

0 → DISTANCE

FIG. 14C

810

IMAGE-CAPTURING
DISTANCE RANGE R3

820

IMAGE-CAPTURING
DISTANCE RANGE R4

830

0 → DISTANCE

FIG. 15

FIG. 16

**EP 4 708 899 A1**

| | Europäisches Patentamt European Patent Office Office européen des brevets | **EUROPEAN SEARCH REPORT** | **Application Number**<br>EP 25 19 9807 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/324522 A1 (HENDERSON ROBERT [GB] ET AL) 12 October 2023 (2023-10-12)<br>* paragraphs [0079] - [0084]; figure 2 *<br>* paragraphs [0087] - [0088]; figures 5A, 5B *<br>* paragraphs [0097] - [0099]; figure 7A *<br>* figure 7B *<br>* paragraph [0110]; figure 10 *<br>* paragraph [0130]; figure 17A *<br>* paragraph [0111]; figure 11 *<br>* paragraphs [0131] - [0132]; figure 17B *<br>* paragraph [0112]; figure 12 *<br>----- | 1-14 | INV.<br>H04N25/773<br>H04N25/53<br>G01S17/89 |
| A | US 2020/244909 A1 (MORIMOTO KAZUHIRO [JP]) 30 July 2020 (2020-07-30)<br>* figures 9-10 *<br>----- | 1-14 | |
| | | | **TECHNICAL FIELDS SEARCHED (IPC)**<br><br>H04N |

The present search report has been drawn up for all claims

| Place of search | Date of completion of the search | Examiner |
|---|---|---|
| Munich | 4 December 2025 | Berne, Jean-François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

## ANNEX TO THE EUROPEAN SEARCH REPORT
## ON EUROPEAN PATENT APPLICATION NO.

EP 25 19 9807

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | Publication date | Patent family member(s) | Publication date |
|---|---|---|---|
| US 2023324522 A1 | 12-10-2023 | EP 4193181 A1 | 14-06-2023 |
| | | KR 20230062638 A | 09-05-2023 |
| | | US 2023324522 A1 | 12-10-2023 |
| | | WO 2022055833 A1 | 17-03-2022 |
| US 2020244909 A1 | 30-07-2020 | JP 7321713 B2 | 07-08-2023 |
| | | JP 7547575 B2 | 09-09-2024 |
| | | JP 2020123847 A | 13-08-2020 |
| | | JP 2023155231 A | 20-10-2023 |
| | | JP 2024161110 A | 15-11-2024 |
| | | JP 2025161892 A | 24-10-2025 |
| | | US 2020244909 A1 | 30-07-2020 |
| | | US 2024171876 A1 | 23-05-2024 |
| | | US 2025185387 A1 | 05-06-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020123847 A

- JP 2024153665 A